# EUROPEAN PATENT APPLICATION

(11) **EP 2 728 317 A1**
(43) Date of publication of application: **07.05.2014**
(21) Application number: 12191077.2
(22) Date of filing: 02.11.2012
(51) Int. Cl.: G01F 11/18, G01F 11/26

(54) **Container for a granular material with an elastic edge part**

(71) Applicant: Bark Innovations B.V., 6961 EC Eerbeek (NL)
(72) Inventor: Debski, Edward Hendrik, 7545 GL Enschede (NL)
(74) Representative: 't Jong, Bastiaan Jacob

(57) **Abstract**

The invention relates to a container for a granular material, the container comprising:
- a storage compartment with a passage opening;
- a dosing compartment with a pouring opening and an inflow opening, wherein the inflow opening is arranged on the passage opening of the storage compartment; and
- closing means, wherein the closing means are movable between a dosing position and a pouring position, wherein the closing means comprise at least one elastic edge part, which elastic edge part is adjacent to an edge part of the inflow opening when the closing means are in a pouring position.

## Description

The invention relates to a container for a granular material, the container comprising:
- a storage compartment with a passage opening;
- a dosing compartment with a pouring opening and an inflow opening, wherein the inflow opening is arranged on the passage opening of the storage compartment; and
- closing means, wherein the closing means are movable between a dosing position and a pouring position.

In particular the invention relates to a container for the purpose of dosing an appropriate quantity of granular material, such as mice poison, coffee, fertilizers, chemicals and consumer goods.

In the case of prior art containers, the possibility of a correct dosage depends on the competence of the user. When dosing using prior art containers, it is often required to open the container, thereby exposing the material, for instance to the environment or the user. Consecutively, the container is tilted and an appropriate quantity is measured using separate components provided, such as measuring cups or balances. Afterwards, the container is tilted back and closed. Not only does this make dosing an appropriate quantity inconvenient, but it also increases the risk of contamination, loss of odor (for instance when dosing coffee) or safety (for instance when dosing mice poison or other chemicals). In addition, when a larger quantity of the material is accidentally taken out of the container than appropriate, it cannot be easily restored in the container. In some cases, dosing an inappropriate quantity will have a negative effect on the activity of the material. Moreover, spilling material can also be costly when the material is expensive.

Thus, for some applications exact dosage of the material is required without exposing the material. In addition, it is sometimes intended to dose multiple quantities of the material consecutively (continuous repetitive dosing).

Containers according to the preamble often comprise a storage compartment and a dosing compartment in connection with each other via an inflow opening. These containers have closing means comprising various plates, movable in unison, enabling dosage of granular material with a pouring opening closed, and pouring of the dosed material with the inflow opening closed. However, because of the nature of the closing means, when granular material becomes trapped between the edge part of the inflow opening and the closing means, the granular material can be damaged or the closing means can get stuck.

It is now an object of the invention to provide a container for granular material wherein the above stated drawbacks are reduced or even obviated.

This object is achieved with a container according to the preamble, which is **characterized in that** the closing means comprise at least one elastic edge part, which elastic edge part is adjacent to an edge part of the inflow opening when the closing means are in a pouring position.

When the closing means are in the dosing position, thus opening the inflow opening, the dosing compartment can be filled with the granular material. After the dosing compartment is filled with an appropriate quantity of the material, the closing means are moved to the pouring position. Because the closing means comprise at least one elastic edge part adjacent to an edge part of the inflow opening, the material close to the edge part of the inflow opening will not be damaged or block the functioning of the closing means, because the elastic edge part of the closing means. This elastic edge part will bend if a granular particle will get stuck between the elastic edge part and the edge of the inflow opening. This prevents damage to the granular particle and will also prevent the closing means from getting stuck.

Preferably, the container comprises operating means, for moving the closing means between the dosing position and the pouring position.

The operating means enable the movement of the closing means between the dosing position and the pouring position by the user with a minimal effort. The operating means can for instance, at least party, be arranged on the outside of the container, allowing easy detection of the operating means by the user. The operating means will also provide an indication of the position of the closing means.

In a preferred embodiment, the at least one elastic edge part comprises a plurality of elastic protrusions.

By providing the container with a plurality of elastic protrusions, the part of the material left close to the edge part of the inflow opening will be bendable more effectively upon movement of the closing means from the dosing position into the pouring positions. The elastic protrusions can flex independently, thereby preventing damage to the particle material and preventing blockage of the closing means.

In another preferred embodiment of the invention, the closing means comprise a movable inner plate for closing the inflow opening, a movable outer plate for closing the pouring opening and a frame part arranged between the inner plate and the outer plate, such that the inner plate and outer plate are movable in unison, the inflow opening is closed by the inner plate in the pouring position and the pouring opening is closed by the outer plate in the dosing position.

Containers comprising such closing means have the advantage that the movement of the container from a dosing position to a pouring position can be performed by one action. Additionally, it is recommended to arrange the inner plate and the outer plate, such that the pouring opening is opened in the pouring position and the inflow opening is opened in the dosing position, for instance by arranging holes in the inner plate and the outer plate with a size and position corresponding to this.

If the container comprises operating means, the frame part is preferably in connection with the operating means, enabling the user to move the closing means between the dosing position and the closing position efficiently and with little effort, and thereby opening and closing the inflow opening and the pouring opening in unison.

In another embodiment of the invention, the closing means comprise an elastic bendable strip, which is arranged in the inflow opening, and a closing part attached to the strip for opening and closing the pouring opening.

Containers according to this embodiment of the invention provide an alternative way of moving between the dosing and the pouring position by one action. By pushing in the closing part, the elastic bendable strip is bent, thereby moving the closing means into the dosing position, i.e. opening the inflow opening. Simultaneously, the closing part closes the pouring opening, preventing a continuous path between the storage compartment and the pouring opening. Upon release of the closing part, the strip and the closing part return to the pouring position.

In yet another embodiment of the invention, the inflow opening and the pouring opening are arranged in a continuous surface and the closing means comprise an elastic shutter element slidable along the continuous surface over the inflow opening and the pouring opening.

Containers according to this embodiment of the invention provide yet another alternative way of switching between the dosing and the pouring position by one action. By arranging the inflow opening and the pouring opening in a continuous surface, and by having closing means comprising an elastic shutter element slidable along the surface, the closing means can be fabricated easier compared to closing means for other types of containers. A guiding rail can be provided to guide the shutter element along the curved surface.

It is preferred that a container according to the invention comprises blocking means, for limiting the movement of the closing means.

The blocking means limit the movement of the closing means, thereby preventing the user from accidentally removing the essential parts, such as the closing means from the container. In addition, the blocking means prevent the user from extending parts of the container, such as the closing means too far and thereby damaging the container, for instance when the closing means is moved beyond the pouring position after moving the closing means from the dosing position to the pouring position.

It is also preferred that in a container according to the invention, the closing means comprise a spring for urging the closing means to a standard position, being either the pouring position or the dosing position.

In a container comprising a spring, the closing means have a standard position, being either the dosing position or the pouring position. Upon manipulation of the closing means, the closing means are moved to or towards another position. When the operating means are released, the spring will automatically urge the closing means to the standard position. For example, the closing means are moved into the dosing position, after which an appropriate quantity is dosed in the dosing compartment, and the manipulation of the closing means ends. Then the spring urges the closing means to the pouring position (being the standard position). Repetition of these steps enables easy and convenient continuous repetitive dosing.

The connection between the dosing compartment and the storage compartment may comprises a threaded connection. The storage compartment and the dosing compartment can also be connected by a snap connection.

The use of a threaded connection for arranging the dosing compartment on the storage compartment enables easy removal of the dosing compartment from the storage compartment, for example for refilling the storage compartment, while providing a tight closure when the dosing compartment is arranged on the storage compartment.

These and other features of the invention are further elucidated with reference to the accompanying drawings.
Figures 1A and 1B are a perspective, cross-sectional front view of an embodiment of the container according to the invention in a dosing position and in a pouring position.
Figures 2A and 2B are a perspective, cross-sectional front view of another embodiment of the container according to the invention in a pouring position and in a dosing position.
Figures 3A and 3B are a perspective, cross-sectional front view of yet another embodiment of the container according to the invention in a pouring position and in a dosing position.
Figures 4A and 4B are a perspective, cross-sectional front view of even another embodiment of the container according to the invention in a pouring position and in a dosing position.
Figure 5 is a perspective, cross-sectional side view of yet another embodiment of the container according to the invention in pouring position.
Figures 6A, 6B, 6C and 6D are a schematic, cross-sectional top view of the embodiment of the container according to figure 5 in dosing and pouring position.

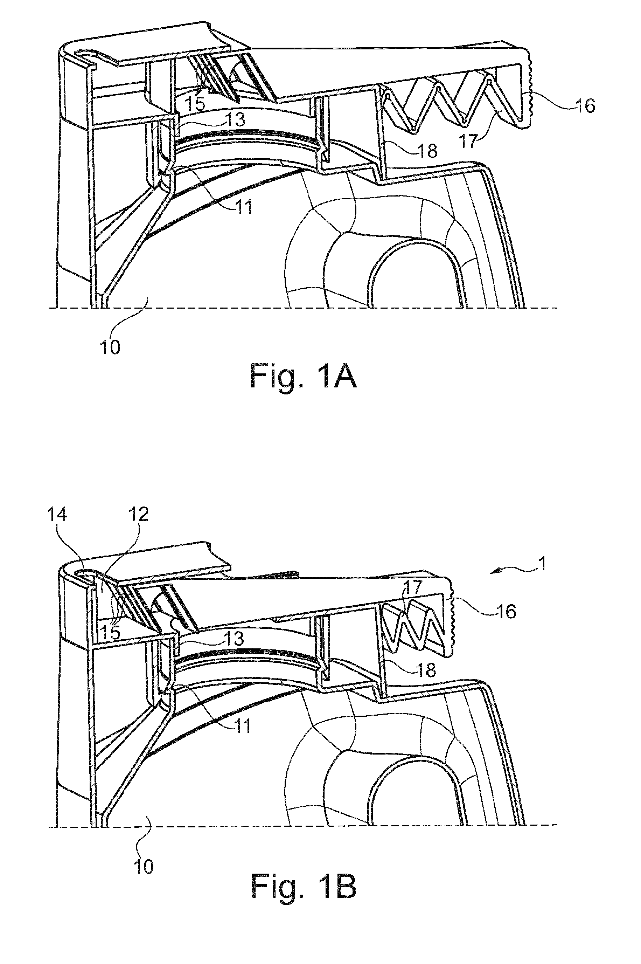

Figure 1A and 1B show a part of an embodiment of the container according to the invention. In figure 1A, the container 1 is shown in the dosing position. The container 1 comprises a storage compartment 10 with a passage opening 11 and a dosing compartment 12 arranged on the storage compartment 10. The dosing compartment 12 comprises an inflow opening 13 and a pouring opening 14. The container also comprises closing means 15. In the dosing position, when the container 1 is preferably held substantially upside down, the closing means are arranged such that an appropriate quantity of the granular material can be dosed in the dosing compartment 12 via passage opening 11 and inflow opening 13, while the pouring opening 14 is closed.

The container also comprises operating means 16 for moving closing means 15 between the dosing position (as shown in figure 1A) and the pouring position (as shown in figure 1B), also comprising a spring 17 and blocking means 18. When the closing means 15 are moved to the pouring position, for instance by operating the operating means 16, the dosing compartment 12 will be moved. This will close off the storage compartment 10 and will open the pouring opening 14. During this process, the container 1 is preferably still held substantially upside down.

Because the closing means comprises a plurality of elastic protrusions 15, the granular material close to the edge part of the inflow opening 13 will not be damaged or block the closing means.

Upon release of the operating means 16, the spring 17 will urge the closing means 15 back to the dosing position.

In this figure, the blocking means comprise a wall part 18. The wall part is arranged such that the movement of the closing means 15 by action of operating means 16 is fixed, because of the attachment of the operating means 16 via spring 17 to wall part 18.

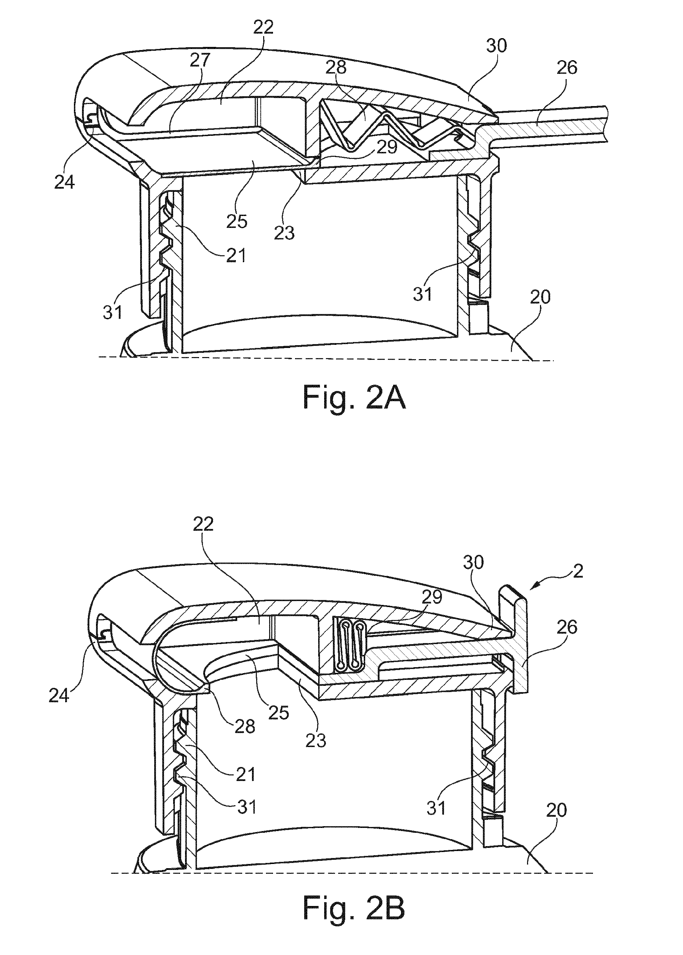

In figure 2A and 2B, another embodiment of a part of a container according to the invention is shown. In figure 2A, the container 2 is shown in the pouring position. The container 2 comprises a storage compartment 20 with a passage opening 21 and a dosing compartment 22 arranged on the storage compartment 20. The dosing compartment 22 comprises an inflow opening 23 and a pouring opening 24.

In the pouring position, when the container 2 is preferably held substantially upside down, the closing means 25 are arranged such that any dosed quantity of the granular material in the dosing compartment 22 can be poured via the pouring opening 24, while closing the dosing compartment 22 from the storage compartment 20.

The closing means of the container comprise an elastic shutter element 25. When the closing means 25 are moved from the pouring position to the dosing position, by means of the operating means 26, the pouring opening 24 is closed and, in unison, the inflow opening 23 is opened. In this way, an appropriate quantity of the granular material can be dosed in the dosing compartment 22 via passage opening 21 and inflow opening 23, while it is still preferred to hold the container 2 substantially upside down.

Because the closing means 25 move along a curved surface, the dosing compartment is provided with a guiding rail 27, for guiding the elastic shutter element 25.

The container 2 also comprises a spring 28, for urging the container 2 back to the pouring position upon release of the operating means 26. Because the container 2 also comprises an elastic edge part 29, the part of the granular material close to the edge part of the inflow opening 23 will not be damaged or block the closing means.

In this figure, the blocking means comprise a wall opening 30. The wall opening is arranged such, that the operating means 26 cannot be pushed any further than blocking means 30, thereby preventing damage to the container 2.

In order to allow for easy removal of the dosing compartment 22 from the storage compartment 20, or for refilling of storage compartment 20, the connection of the dosing compartment 22 with the storage compartment 20 comprises a threaded connection 31.

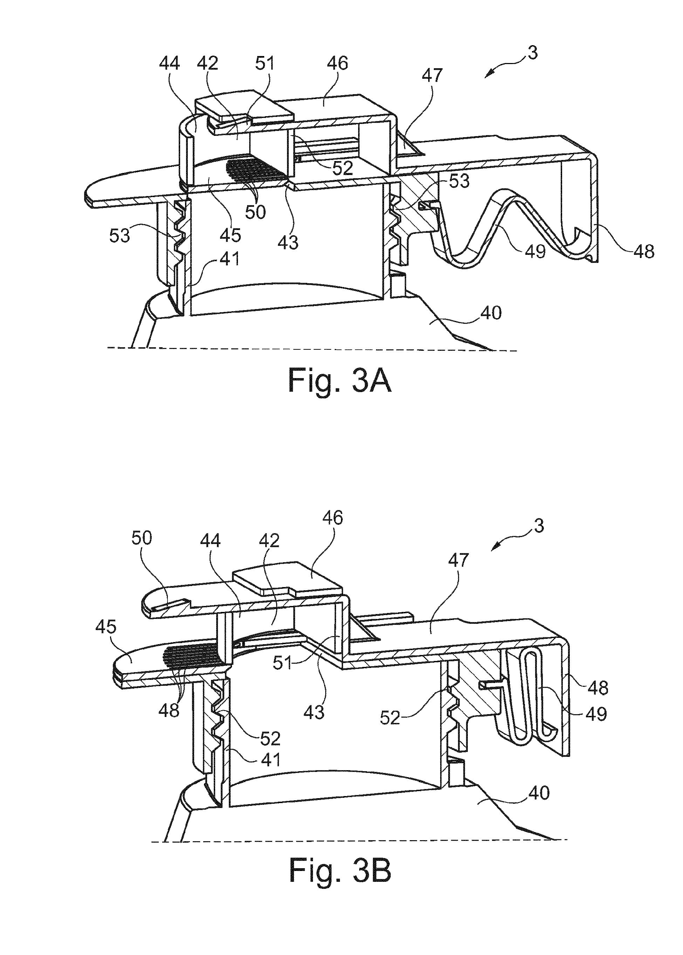

In figure 3A and 3B, a part of yet another embodiment of a container 3 according to the invention is shown. In figure 3A, the container 3 is shown in the pouring position. The container 3 comprises a storage compartment 40 with a passage opening 41 and a dosing compartment 42 arranged on the storage compartment 40. The dosing compartment 42 comprises an inflow opening 43 and a pouring opening 44.

The closing means comprise an inner plate 45 and an outer plate 46, both connected to frame part 47. In the pouring position, when the container preferentially is used substantially upside down, the closing means are arranged such that any dosed quantity of the granular material in the dosing compartment 42 can be poured via the pouring opening 44, while closing the dosing compartment 42 from the storage compartment 40.

When the closing means 45, 46 are moved from the pouring position to the dosing position, for instance by means of the operating means 48, the pouring opening 44 is closed by outer plate 46 and, in unison, the inflow opening 43 is opened by inner plate 45. In this way, an appropriate quantity of the granular material can be dosed in the dosing compartment 42 via passage opening 41 and inflow opening 43, while the container 3 is still preferentially held substantially upside down.

The container 3 also comprises a spring 49, for urging the container 3 back to the pouring position upon release of the operating means 48. Because the container 3 also comprises a plurality of elastic protrusions 50, the part of the granular material close to the edge part of the inflow opening 43 will not be damaged or clog, while at the same time keeping the material close to the edge part of the inflow opening 43 firmly in position, preventing clogging of the dosing compartment 42.

In this figure, the blocking means comprise a small hook 51 on the outer plate 46. By providing outer plate 46 with a small hook 51, the outer plate 46 cannot be pulled out of the container 3, thereby limiting the movement of closing means 45, 46.

The blocking means also comprise a wall part 52. The wall opening is arranged such, that the operating means 48 cannot be pushed any further than blocking means 52, thereby preventing damage to the container 3.

In order to allow for easy removal of the dosing compartment 42 from the storage compartment 40, or for refilling of storage compartment 40, the connection of the dosing compartment 42 with the storage compartment 40 comprises a threaded connection 52.

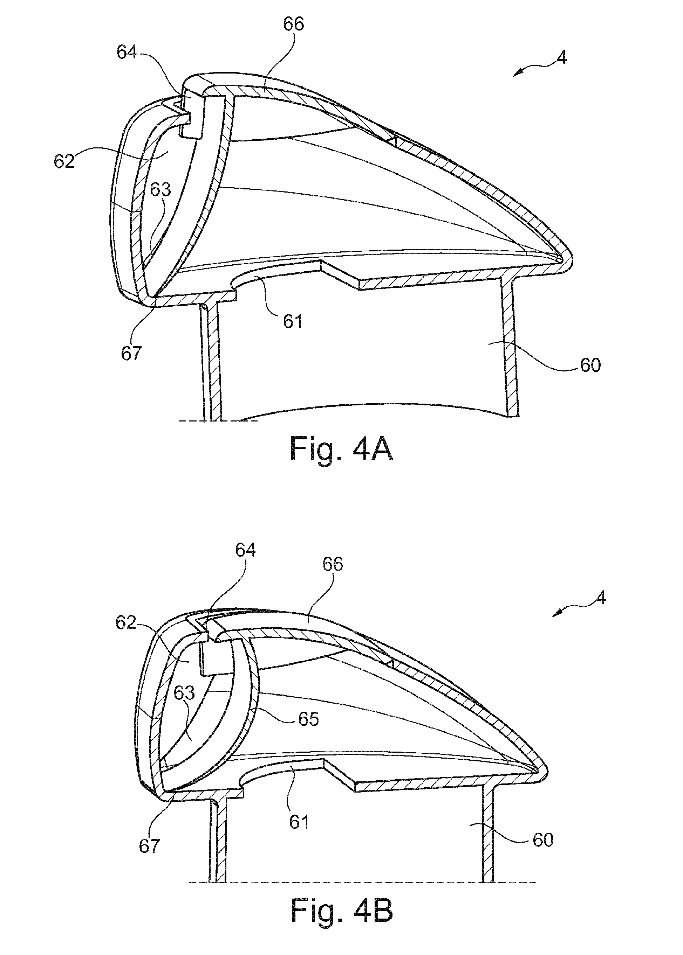

In figure 4A and 4B, a part of yet another embodiment of a container 4 according to the invention is shown. In figure 4A, the container 4 is shown in the pouring position. The container 4 comprises a storage compartment 60 with a passage opening 61, and a dosing compartment 62 with an inflow opening 63 and a pouring opening 64.

The closing means comprise an elastic bendable strip 65 with a closing part 66. In the pouring position, the closing means 65, 66 are in a relaxed state, such that any dosed quantity of the granular material in the dosing compartment 62 can be poured via the pouring opening 64, while closing the dosing compartment 62 from the storage compartment 60. In the relaxed state, the elastic bendable strip rests on two chambers (not shown) in the dosing compartment.

When the closing means 65, 66 are moved from the pouring position to the dosing position, for instance by pushing the operating means 66, the pouring opening 64 is closed by the closing plate 66 and, in unison, the inflow opening 63 is opened by bending of the elastic bendable strip 65. In this way, an appropriate quantity of the granular material can be dosed in the dosing compartment 62 via passage opening 61 and inflow opening 63. While using the container 4, the container 4 is held preferentially substantially upside down.

Because of the elastic nature of the elastic bendable strip 65, the container 4 will return to the pouring position upon release of the operating means 66.

In this figure, the blocking means comprise the attachment of the elastic bendable strip 65 to the container 4 by fixture point 67. By fixing the elastic bendable strip 65 to container 4, the elastic bendable strip 65 cannot be accidentally removed from the container 4.

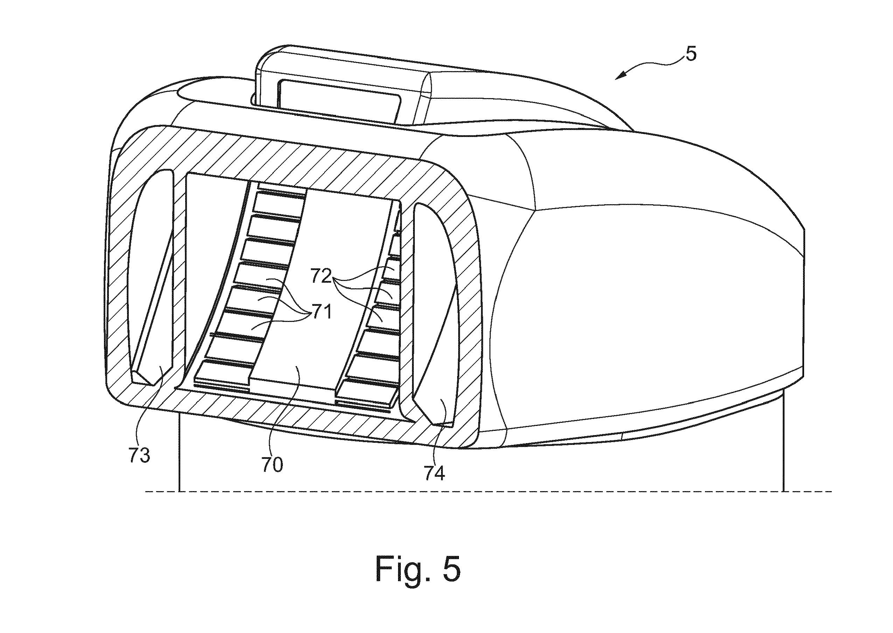

Figure 5 shows a part of yet another embodiment of a container according to the invention. In figure 5, the container 5 is shown in the pouring position. The container 5 differs from the container 4 such, that the elastic bendable strip 70 contains two rows of elastic protrusions 71, 72, resting on two chambers 73, 74. The elastic protrusions create a barrier impermeable for granular material when the elastic bendable strip is in the relaxed state.

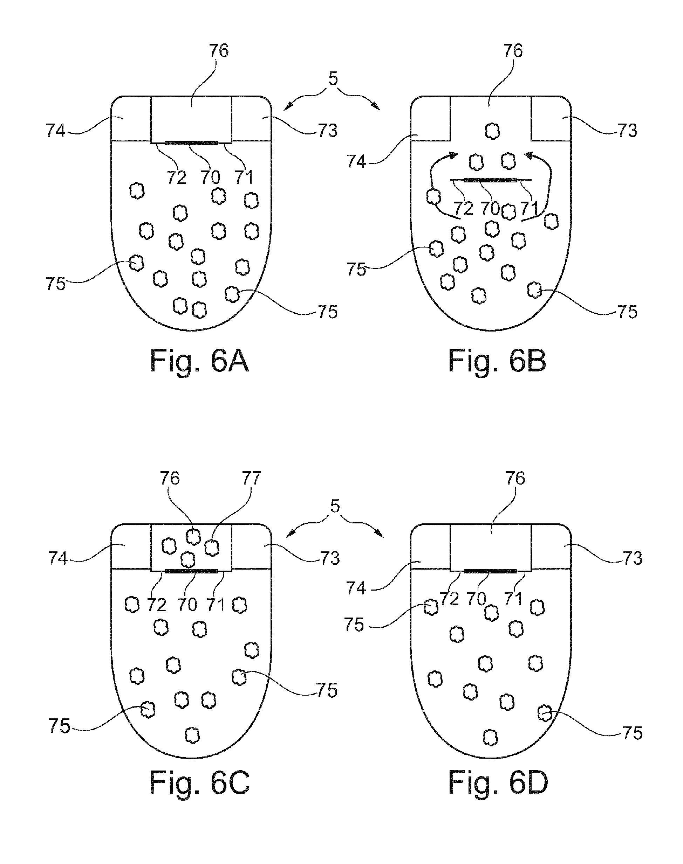

In figure 6, the process of using the container according to figure 5 is shown in greater detail. When the container is in the pouring position (the relaxed state), according to figure 6A, the elastic bendable strip 70 will close the inflow opening, thereby preventing the granular material 75 from entering the dosing compartment 76. When the container is moved to the dosing position (figure 6B), the granular material 75 can enter the dosing compartment 76. Upon movement of the container into pouring position, any granular material 77 in the dosing compartment 76 can be poured via the pouring opening (figure 6C), until the dosing compartment 76 is empty (figure 6D).

## Claims

1. Container for a granular material, the container comprising:
- a storage compartment with a passage opening;
- a dosing compartment with a pouring opening and an inflow opening, wherein the inflow opening is arranged on the passage opening of the storage compartment; and
- closing means, wherein the closing means are movable between a dosing position and a pouring position,
**characterized in that**
the closing means comprise at least one elastic edge part, which elastic edge part is adjacent to an edge part of the inflow opening when the closing means are in a pouring position.

2. Container according to claim 1, comprising operating means for moving the closing means between the dosing position and the pouring position.

3. Container according to claim 1 or 2, wherein the at least one elastic edge part comprises a plurality of elastic protrusions.

4. Container according to any of the preceding claims, wherein the closing means comprise:
- a movable inner plate for closing the inflow opening;
- a movable outer plate for closing the pouring opening; and
- a frame part arranged between the inner plate and the outer plate, such that the inner plate and outer plate are movable in unison, the inflow opening is closed by the inner plate in the pouring position and the pouring opening is closed by the outer plate in the dosing position.

5. Container according to any of the claims 1 to 3, wherein the closing means comprise an elastic bendable strip, which is arranged in the inflow opening, and a closing part attached to the strip for opening and closing the pouring opening.

6. Container according to any of the claims 1 to 3, wherein the inflow opening and the pouring opening are arranged in a continuous surface and wherein the closing means comprise an elastic shutter element slidable along the continuous surface over the inflow opening and the pouring opening.

7. Container according to any of the preceding claims, comprising blocking means, for limiting the movement of the closing means.

8. Container according to any of the preceding claims, wherein the closing means comprise a spring for urging the closing means to a standard position, being either the pouring position or the dosing position.

9. Container according to any of the preceding claims, wherein the connection between the dosing compartment and the storage compartment comprises a threaded connection.
